# EUROPÄISCHE PATENTSCHRIFT

(11) **EP 1 915 566 B1**
(45) Veröffentlichungstag und Bekanntmachung des Hinweises auf die Patenterteilung: **04.03.2009**
(21) Anmeldenummer: 06776395.3
(22) Anmeldetag: 25.07.2006
(51) Int. Cl.: F17C 5/00

(54) **MOBILE WASSERSTOFF-TANKSTELLE**
MOBILE HYDROGEN SERVICE STATION
STATION D'APPROVISIONNEMENT EN HYDROGENE MOBILE

(30) Priorität: 18.08.2005 DE 102005039202
(43) Veröffentlichungstag der Anmeldung: 30.04.2008
(73) Patentinhaber: Linde Aktiengesellschaft, 80807 München (DE)
(72) Erfinder: KEDERER, Tobias, 82049 Pullach (DE); TOMFORDE, Henning, 71069 Sindelfingen (DE)
(74) Vertreter: Zahn, Christoph
(86) Internationale Anmeldenummer: PCT/EP2006/007334
(87) Internationale Veröffentlichungsnummer: WO 2007/019948

(56) Entgegenhaltungen:
- EP-A- 1 517 079
- EP-A2- 1 266 811
- WO-A-98/12763
- WO-A-03/075380
- WO-A-20/04105212
- WO-A2-02/064395
- WO-A2-03/032429
- US-A1- 2005 126 195
- US-B1- 6 745 801

## Beschreibung

Die Erfindung betrifft eine Tankstelle, insbesondere eine Wasserstoff-Tankstelle, zum Betanken eines Fahrzeuges mit einem gasförmigen und/oder flüssigen Medium, insbesondere mit gasförmigem und flüssigem Wasserstoff.

Unter dem Begriff "Fahrzeug(e)" seien nachfolgend alle denkbaren Fahrzeugtypen, wie Pkws, Lkws, Busse, Arbeitsmaschinen, Lokomotiven, etc., die mit gasförmigen und/oder flüssigen Medien betankt werden, zu verstehen.

Gattungsgemäße Tankstellen sind bisher im Regelfall ortsgebunden, abhängig von Fremdenergie und darüber hinaus nicht immissionsfrei. Die WO-A 02/064395 offenbart eine ortsgebunde Wasserstoff-Tankstelle, die für die Abgabe von gasförmigem und flüssigem Wasserstoff ausgelegt ist. Eine derartige Tankstelle weist einen Speicherbehälter für verflüssigten Wasserstoff sowie einen Hochdruck-Speicherbehälter für gasförmigen Wasserstoff auf. Ferner sind wenigstens zwei separate Pumpen vorzusehen, von denen eine der Förderung des verflüssigten Wasserstoffs dient, während die zweite Pumpe als sog. kryogene Druckerhöhungspumpe ausgelegt ist.

Gerade in der Demonstrations- bzw. Einführungsphase von Wasserstoff als Energiespeicher für Fahrzeuge sind jedoch mobile Tankstellen für flüssigen und/oder gasförmigen Wasserstoff gefragt.

Bisher wird die mobile Betankung von mit Wasserstoff-betriebenen Fahrzeugen realisiert, indem entweder verflüssigter oder unter Druck stehender Wasserstoff mittels Tankfahrzeugen an die Betankungsstelle transportiert und dort auf herkömmliche Weise das Fahrzeug mit flüssigem oder gasförmigen Wasserstoff betankt wird.

Aufgabe der vorliegenden Erfindung ist es, eine gattungsgemäße Tankstelle zum Betanken eines Fahrzeuges mit einem gasförmigen und flüssigen Medium, insbesondere mit gasförmigem und flüssigem Wasserstoff, anzugeben, die die Nachteile bekannter mobiler Tankstellen-Konzepte vermeidet bzw. überwindet.

Zur Lösung dieser Aufgabe wird eine mobile Tankstelle, insbesondere eine Wasserstoff-Tankstelle, zum Betanken eines Fahrzeuges mit einem gasförmigen und/oder flüssigen Medium, insbesondere mit gasförmigem und flüssigem Wasserstoff, vorgeschlagen, aufweisend
a) einen Speicher, der der Speicherung von verflüssigtem Medium, insbesondere von flüssigem Wasserstoff dient,
b) eine Abgabeeinheit für flüssiges Medium, der verflüssigtes Medium aus dem Speicher zuführbar ist,
c) einen Verdichter, einen ihm vorgeschalteten Verdampfer, einen dem Verdichter nachgeschalteten Erhitzer und einen dem Erhitzer nachgeschalteten Zwischenspeicher, der der Zwischenspeicherung von verdichtetem, gasförmigen Medium dient,
d) eine dem Zwischenspeicher nachgeschaltete Abgabeeinheit für gasförmiges Medium,
e) eine Brennstoffzelle, der gasförmiges Medium aus dem Speicher und/oder dem Zwischenspeicher zuführbar ist und die den Verdichter mit Energie versorgt, und
f) eine von der Brennstoffzelle gespeiste Steuereinheit, die der Steuerung des Verdichters, der Abgabeeinheit für gasförmiges Medium und/oder der Abgabeeinheit für flüssiges Medium dient.

Weitere vorteilhafte Ausgestaltungen der erfindungsgemäßen Tankstelle sind dadurch gekennzeichnet, dass
- der Verdampfer und/oder der Erhitzer als Luft-Verdampfer ausgebildet ist bzw. sind,
- der Verdichter für eine Verdichtung des flüssigen Mediums auf einen Druck von bis zu 1000 bar und der Zwischenspeicher für eine Speicherung des verdichteten gasförmigen Mediums bei einem Druck bis zu 1000 bar ausgelegt sind und
- der Abgabeeinheit für flüssiges Medium eine Pumpe zugeordnet ist.

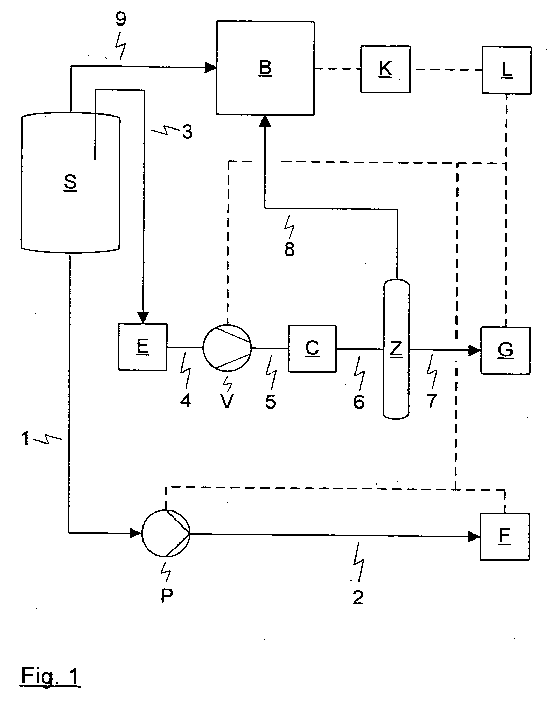

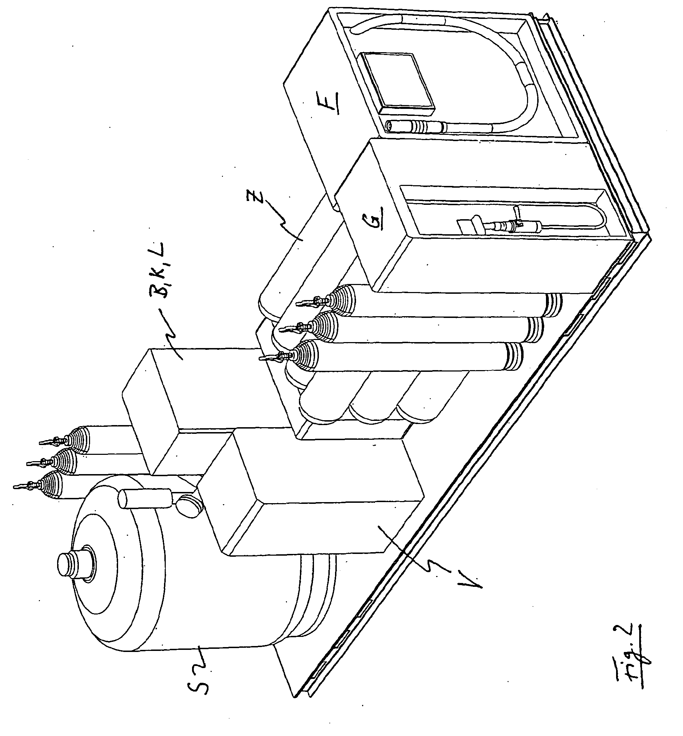

Die erfindungsgemäße Tankstelle sowie weitere Ausgestaltung derselben, die Gegenstände der abhängigen Patentansprüche darstellen, seien im Folgenden anhand der in den Figuren 1 und 2 dargestellten Ausführungsbeispiele näher erläutert.

Hierbei zeigt die **Figur 1** das Schema einer Wasserstoff-Tankstelle. Diese weist einen Speicher S auf, der der Speicherung von verflüssigtem Wasserstoff dient und der im

Regelfall eine Kapazität von maximal 1000 Liter Flüssig-Wasserstoff - dies entspricht ca. 786 Nm³ - aufweist.

Ferner sind zwei Abgabeeinheiten bzw. Dispenser G und F vorgesehen, über die gasförmiger Wasserstoff - Abgabeeinheit G - und flüssiger Wasserstoff - Abgabeeinheit F - an das zu betankende Fahrzeug abgegeben werden können.

Die Zuführung von flüssigem Wasserstoff aus dem Speicher S zu der Abgabeeinheit F erfolgt über die Leitungsabschnitt 1 und 2, in denen - entsprechend einer vorteilhaften Ausgestaltung der erfindungsgemäßen Tankstelle - eine geeignete Tieftemperaturpumpe P vorgesehen sein kann.

Der Abgabeeinheit G für gasförmigen Wasserstoff vorgeschaltet sind in Strömungsrichtung ein Verdampfer E, ein Kryoverdichter V, ein Erhitzer C sowie ein Zwischenspeicher Z. Der Verdampfer E und/oder der Erhitzer C ist bzw sind vorzugsweise als Luftverdampfer ausgebildet.

Der vorbeschriebene Zwischenspeicher Z ist gemäß einer vorteilhaften Ausgestaltung der erfindungsgemäßen Tankstelle für Drücke bis zu 1000 bar ausgelegt. Gegenwärtig werden erste erfindungsgemäße Tankstellen mit Drucklagen bis zu 500 bar projektiert. Es ist jedoch beabsichtigt, zukünftig auch Drucklagen zwischen 700 und 1000 bar zu realisieren.

Die Betankung von Fahrzeugen, die mit gasförmigem Wasserstoff betrieben werden, erfolgt über einen Kaskaden-Druckausgleich zwischen dem Zwischenspeicher Z und dem Fahrzeugtank über den Leitungsabschnitt 7 sowie die Abgabeeinheit G. Die Befüllung des Zwischenspeichers Z wiederum erfolgt über die Leitungsabschnitte 3, 4 und 5 sowie den Kryoverdichter V, der eine Druckerhöhung des aus dem Speicher S abgezogenen und vor dem Kryoverdichter V verdampften Wasserstoffes auf den gewünschten (Zwischen)Speicher- bzw. Abgabedruck des gasförmig gespeicherten Wasserstoffs ermöglicht.

Innerhalb des Speichers S und/oder des Zwischenspeichers Z anfallender gasförmiger Wasserstoff wird aus den vorgenannten Speichern über die Leitungen 8 und/oder 9 abgezogen und einer Brennstoffzelle B, die als Energiequelle für die erfindungsgemäße Tankstelle dient, als Einsatz zugeführt. Der in der Brennstoffzelle B gewonnene Gleichstrom wird in einem DC/AC-Konverter K in Wechselstrom, der der Versorgung der Steuereinheit L und des Kryoverdichters V dient, umgewandelt. Die Steuereinheit L wiederum steuert die Abgabeeinheiten G und F, sowie den Verdichter -V bzw. deren Antriebe an - dargestellt durch die gestrichelt gezeichneten Linien.

In der **Figur 2** dargestellt ist eine mögliche Anordnung der vorbeschriebenen Komponenten bzw. Einheiten der erfindungsgemäßen Tankstelle, wie sie beispielsweise auf einer mittels eines Lastkraftwagens transportablen Palette angeordnet sein können.

Die Erfindung schafft eine mobile, autarke sowieso immissionsfreie Tankstelle, insbesondere Wasserstoff-Tankstelle, die bei entsprechender Dimensionierung beispielsweise auf bzw. mittels eines Transporters bzw. Klein-Lkws transportierbar ist. Dadurch wird zu jeder Zeit ein beliebiger und schneller Standortwechsel - auch an vergleichsweise abgelegenen Einsatzorten - möglich. Des Weiteren ist im Gegensatz zu den bisher bekannten mobilen Wasserstoff-Tankstelle eine zeitgleiche Betankung von Fahrzeugen mit gasförmigem und flüssigem Wasserstoff realisierbar.

## Patentansprüche

1. Mobile Tankstelle, insbesondere mobile Wasserstoff-Tankstelle, zum Betanken eines Fahrzeuges mit einem gasförmigen und/oder flüssigen Medium, insbesondere mit gasförmigem und flüssigem Wasserstoff, aufweisend
a) einen Speicher (S), der der Speicherung von verflüssigtem Medium dient,
b) eine Abgabeeinheit (F) für flüssiges Medium, der verflüssigtes Medium aus dem Speicher (S) zuführbar ist,
c) einen Verdichter (V), einen ihm vorgeschalteten Verdampfer (E), einen dem Verdichter (V) nachgeschalteten Erhitzer C und einem dem Erhitzer (C) nachgeschalteten Zwischenspeicher (Z), der der Zwischenspeicherung von verdichtetem, gasförmigen Medium dient,
d) eine dem Zwischenspeicher (Z) nachgeschaltete Abgabeeinheit (G) für gasförmiges Medium,
e) eine Brennstoffzelle (B), der gasförmiges Medium aus dem Speicher (S) und/oder dem Zwischenspeicher (Z) zuführbar ist (8, 9) und die den Verdichter (V) mit Energie versorgt, und
f) eine, von der Brennstoffzelle (B) gespeiste Steuereinheit (L), die der Steuerung des Verdichters (V), der Abgabeeinheit (G) für gasförmiges Medium und/oder der Abgabeeinheit (F) für flüssiges Medium dient.

2. Mobile Tankstelle nach Anspruch 1, **dadurch gekennzeichnet, dass** der Verdampfer (E) und/oder der Erhitzer (C) als Luft-Verdampfer ausgebildet ist bzw. sind.

3. Mobile Tankstelle nach Anspruch 1 oder 2, **dadurch gekennzeichnet, dass** der Verdichter (V) für eine Verdichtung des verdampften Mediums auf einen Druck von bis zu 1000 bar und der Zwischenspeicher (Z) für eine Speicherung des verdichteten gasförmigen Mediums bei einem Druck von bis zu 1000 bar ausgelegt sind.

4. Mobile Tankstelle nach einem der vorhergehenden Ansprüche 1 bis 3, **dadurch gekennzeichnet, dass** der Abgabeeinheit (F) für flüssiges Medium eine Pumpe (P) zugeordnet ist.

## Claims

1. Mobile filling station, in particular mobile hydrogen filling station, for filling a vehicle with a gaseous and/or liquid medium, in particular with gaseous and liquid hydrogen, having
a) a store (S) which serves for the storage of liquefied medium,
b) a dispensing unit (F) for liquid medium, to which liquefied medium can be supplied from the store (S),
c) a compressor (V), an evaporator (E) preceding it, a heater (C) following the compressor (V), and an intermediate store (Z) which follows the heater (C) and which serves for the intermediate storage of compressed gaseous medium,
d) a dispensing unit (G), following the intermediate store (Z), for gaseous medium,
e) a fuel cell (B) to which gaseous medium can be supplied (8, 9) from the store (S) and/or from the intermediate store (Z) and which supplies the compressor (V) with energy, and
f) a control unit (L) which is fed from the fuel cell (B) and which serves for controlling the compressor (V), the dispensing unit (G) for gaseous medium and/or the dispensing unit (F) for liquid medium.

2. Mobile filling station according to Claim 1, **characterized in that** the evaporator (E) and/or the heater (C) are/is designed as an air evaporator.

3. Mobile filling station according to Claim 1 or 2, **characterized in that** the compressor (V) is designed for compressing the evaporated medium to a pressure of up to 1000 bar, and the intermediate store (Z) is designed for storing the compressed gaseous medium at a pressure of up to 1000 bar.

4. Mobile filling station according to one of the preceding Claims 1 to 3, **characterized in that** the dispensing unit (F) for liquid medium is assigned a pump (P).

## Revendications

1. Station d'approvisionnement mobile, en particulier station mobile d'approvisionnement en hydrogène, pour le remplissage d'un véhicule avec un milieu gazeux et/ou liquide, en particulier avec de l'hydrogène gazeux et liquide, présentant :
a) un accumulateur (S) qui sert à stocker un milieu liquéfié,
b) une unité de distribution (F) pour le milieu fluide, à laquelle du milieu liquéfié peut être acheminé depuis l'accumulateur (S),
c) un compresseur (V), un évaporateur (E) monté avant lui, un dispositif de chauffage (C) monté après le compresseur (V), et un accumulateur intermédiaire (Z) monté après le dispositif de chauffage (C), qui sert au stockage intermédiaire de milieu gazeux comprimé,
d) une unité de distribution (G) montée après l'accumulateur intermédiaire (Z), pour le milieu gazeux,
e) une pile à combustible (B) à laquelle du milieu gazeux peut être acheminé (8, 9) depuis l'accumulateur (S) et/ou depuis l'accumulateur intermédiaire (Z) et qui alimente le compresseur (V) en énergie, et
f) une unité de commande (L) alimentée par la pile à combustible (B), qui sert à commander le compresseur (V), l'unité de distribution (G) pour le milieu gazeux et/ou l'unité de distribution (F) pour le milieu fluide.

2. Station d'approvisionnement mobile selon la revendication 1, **caractérisée en ce que** l'évaporateur (E) et/ou le dispositif de chauffage (C) est ou sont réalisés sous forme d'évaporateur à air.

3. Station d'approvisionnement mobile selon la revendication 1 ou 2, **caractérisée en ce que** le compresseur (V) est conçu pour comprimer le milieu évaporé à une pression allant jusqu'à 1000 bars et l'accumulateur intermédiaire (Z) est conçu pour stocker le milieu gazeux comprimé à une pression allant jusqu'à 1000 bars.

4. Station d'approvisionnement mobile selon l'une quelconque des revendications précédentes 1 à 3, **caractérisée en ce que** l'unité de distribution (F) pour le milieu fluide est associée à une pompe (P).
